**Europäisches Patentamt**

**European Patent Office**

**Office européen des brevets**

(19)

(11) Veröffentlichungsnummer: **0 121 190**
**B1**

(12) **EUROPÄISCHE PATENTSCHRIFT**

(45) Veröffentlichungstag der Patentschrift:
03.06.87

(51) Int. Cl.⁴: **F 16 B 21/16**

(21) Anmeldenummer: **84103202.2**

(22) Anmeldetag: **23.03.84**

(54) **Schnellverschluss für die lösbare Verbindung zweier Bauteile.**

(30) Priorität: **30.03.83 DE 3311609**

(43) Veröffentlichungstag der Anmeldung:
**10.10.84 Patentblatt 84/41**

(45) Bekanntmachung des Hinweises auf die Patenterteilung:
**03.06.87 Patentblatt 87/23**

(84) Benannte Vertragsstaaten:
**BE FR GB IT NL**

(56) Entgegenhaltungen:
**EP - A - 0 021 249**
**DE - C - 366 803**
**FR - A - 2 277 297**
**US - E - 19 287**

(73) Patentinhaber: **REFLECTA GMBH FOTO FILM PROJEKTION, Berlichingenstrasse 9, D-8540 Schwabach (DE)**

(72) Erfinder: **Oerke, Thilo, Schatzlgasse 23 und Maxstrasse 1, D-8137 Berg Starnberger See 1 (DE)**

(74) Vertreter: **LOUIS, PÖHLAU, LOHRENTZ & SEGETH, Kesslerplatz 1 P.B. 3055, D-8500 Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Schnellverschluss für die lösbare Verbindung zweier Bauteile gemäss dem Oberbegriff des Anspruchs 1.

Schnellverschlüsse werden dort eingesetzt, wo Bauteile regelmässig zusammengefügt und gelöst werden müssen und es auf eine schnelle und bequeme Handhabung ankommt.

Ein bekannter Schnellverschluss ist der sogenannte Bajonettverschluss, der häufig als Verbindung zwischen einem Kameragehäuse und Wechselobjektiven eingesetzt ist. Beim Bajonettverschluss bestehen die Verbindungselemente normalerweise aus zwei zylindrischen Teilen, von denen ein Teil eine axiale Führungsnut aufweist, die radial abknickt und in der ein Vorsprung des zweiten Teils bewegbar ist. Zur Herbeiführung der Verbindung werden beide Teile in axialer Richtung zusammengesteckt und gegeneinander verdreht, so dass der Vorsprung aus dem Bereich der axialen Führungsnut gedreht wird und ein axiales Auseinanderziehen der Verbindungsteile verhindert. Insbesondere bei den so funktionierenden Objektivverschlüssen ist eine Verriegelungsvorrichtung vorgesehen, die ein unbeabsichtigtes oder durch Erschütterungen hervorgerufenes Zurückdrehen des Objektives gegenüber dem Kameragehäuse und damit eine unbeabsichtigte Lösung des Objektivs verhindert.

Bajonettverschlüsse sind feste Verbindungen in bezug auf axiale Zugbewegungen, eine Sicherung gegenüber Drehbelastungen führt bereits zu einem relativ komplizierten und teueren Aufbau. Weiter muss vor dem Verbinden des Bajonettverschlusses die Führungsnut und der Vorsprung an den beiden Teilen fluchtend ausgerichtet werden, was unbequem ist und eine gewisse Konzentration erfordert, so dass eine Ablenkung von der eigentlichen Tätigkeit, beispielsweise dem Fotografieren, möglich ist.

Weiter ist ein Steckschlüssel bekannt (US-E-19 287) mit lösbarem Schraubenkopf (Nuss), der mit Hilfe eines Schnellverschlusses an einem Schaft befestigbar ist. Der Schnellverschluss enthält zwei um 180° versetzte, federbelastete Riegel, die im Innenteil angeordnet sind und über dessen Aussenkontur vorstehen. Die Entriegelungseinrichtung besteht aus nur einer Schubstange, die in einer Bohrung frei bewegbar ist. Die Verbindung erfolgt über eine Vierkant-Steckverbindung, die Dreh- und Kippmomente aufnimmt. Die Verriegelungseinrichtung dient lediglich als Sicherung, die das Abfallen des Schraubenkopfes verhindern soll; axiale Zugkräfte treten bei der Benutzung des Schraubenschlüssels praktisch nicht auf. Wegen der Vierkantverbindung müssen die beiden zu verbindenden Teile formentsprechend übereinandergebracht werden, bevor sie zusammengesteckt werden können. Die Vierkant-Steckverbindung baut relativ lang.

Weiter ist eine Schlauchkupplung bekannt (DE-C-366 803) mit einer Schnellverschlusseinrichtung. Der Schnellverschluss enthält Verbindungszapfen und eine relativ lang bauende Steckverbindung. Für die Entriegelung sind Stifte vorgesehen, die direkt mit den Riegeln vebunden sind. Die Handhabung erfordert auch hierbei ein aufmerksames Hinsehen während des Verbindungsvorgangs.

Aufgabe der Erfindung ist es demgegenüber, einen Schnellverschluss zu schaffen, der eine stabile, relativ kurz bauende Verbindung herstellt und der schnell zusammengefügt und gelöst werden kann.

Diese Aufgabe wird bei einem gattungsgemässen Schnellverschluss mit den kennzeichnenden Merkmalen des Anspruchs 1 gelöst.

Bei der Gattungsbildung des Anspruchs 1 wurde von einem Schnellverschluss gemäss der US-E-19 287 ausgegangen. Erfindungsgemäss liegen die Anlageflächen senkrecht zur Schliessrichtung und liegen im geschlossenen Zustand stumpf aneinander. Das zweite Schnellverschlusselement enthält ein rotationssymmetrisches Fallenteil, das aus einem etwa senkrecht zur Anlagefläche stehenden Verbindungsteil und einem daran angeschlossenen, die Riegel im geschlossenen Zustand übergreifenden Vorsprung besteht, so dass das erste Schnellverschlusselement zwischen der Anlagefläche und dem Vorsprung gehalten und gestützt ist. Die Anlageflächen weisen weiter formschlüssig ineinandergreifende Profile auf, die so angeordnet sind, dass in der Eingriffsstellung die Riegel gegenüber den Schubelementen liegen.

Die beiden Schnellverschlusselemente bzw. die zu verbindenden Bauteile werden durch die Anlageflächen einerseits und durch die beiden Riegel abgestützt und zusammengehalten. Bei angreifenden Druckkräften werden lediglich die Anlageflächen mehr aneinandergepresst. Zugkräfte werden von den Riegeln und dem die Riegel umgreifenden Fallenteil aufgenommen. Kippmomente werden an einem Riegel und an der diesem Riegel gegenüberliegenden Flächenkante der Anlagefläche abgestützt. Als Verdrehsicherung sind die Anlageflächen mit formschlüssig ineinandergreifenden Profilen versehen. Das Profil soll eine solche Gestalt haben und so angebracht sein, dass beim Einrasten des Profils die Entriegelungseinrichtungen so ausgerichtet sind, dass sie an den Riegel in der für die Entriegelung gewünschten Stellung liegen.

Die Verbindung des Schnellverschlusses ist sehr einfach durchzuführen. Die beiden Schnellverschlusselement müssen mit ihren Anlageflächen zusammengeführt, leicht aufeinandergepresst und gegeneinander so lange verdreht werden, bis die Profile ineinandergreifen. Dadurch werden die Vorsprünge der Fallenteile bzw. der umlaufende Bund des rotationssymmetrischen Fallenteils über die Riegel geführt und zugleich Entriegelungseinrichtungen an den Riegeln justiert. Es ist zweckmässig, die Profiltiefe nur gering zu wählen und die vordere Anlagekante der Riegel an den Vorsprüngen am Fallenteil etwas anzuschrägen. Dadurch wird erreicht, dass schon beim Zusammenführen der beiden Schnellverschlusselemente die Riegel etwas unter die Vorsprünge an den Fallenteilen greifen und dadurch bereits eine, wenn auch nicht stabile Verbindung hergestellt ist. Nun können beide Schnellverschlusselemente gegeneinander verdreht werden, ohne dass sie aneinandergepresst werden müssen, da beim Übereinstimmen der Profile diese durch die nun auseinanderdrängenden Riegel ineinandergeführt werden. Das bedeutet, dass die Profile wegen der Riegelvorspannung selbsttätig ineinanderrasten und zugleich die Entriegelungseinrichtungen ausgerichtet sind.

Der Schnellverschluss führt somit zu einer stabilen, relativ kurz bauenden Verbindung, die einfach und bequem zusammengefügt und gelöst werden kann.

Nach Anspruch 2 werden zwei um 180° versetzte Riegel verwendet. Dies führt zu einer fertigungstechnisch einfachen Lösung, da der Führungskanal für die Riegel als durchgehender Kanal eines Bauteils im ersten Schnellverschlusselement gestaltet werden kann. Weiter hat sich gezeigt, dass zwei Riegel, die eine gewisse Breite aufweisen, für eine stabile Verbindung ausreichend sind. Eine solche Verbindung lässt sich zudem einfach lösen, da die Entriegelungsknöpfe entgegengesetzt aufeinander zubewegt werden müssen und diese beispielsweise mit Daumen und Zeigefinger bequem betätigt werden können.

Mit Anspruch 3 wird eine fertigungstechnisch einfache und preiswerte Profilausgestaltung vorgeschlagen.

Es ist zweckmässig, die in Anspruch 4 bezeichneten Einlaufschrägen an den Seiten zusätzlich zu der ohnehin notwendigen Einlaufschräge für das Aufstecken des zweiten Schnellverschlusselements vorzusehen. Die seitlichen Einlaufschrägen dienen dazu, bei der vorbeschriebenen Drehung der Schnellverschlusselemente gegeneinander ein störungsfreies Auflaufen oder Zurückdrängen der Schubelemente der Entriegelungseinrichtung auf den jeweiligen Riegel zu gewährleisten.

Gemäss Anspruch 5 kann zwischen einem Schnellverschlusselement und dem dazugehörigen Bauteil eine Drehverbindung mit etwa senkrecht zur Auflage stehender Drehachse vorgesehen sein. Das bedeutet, dass das Bauteil gegenüber dem entsprechenden Schnellverschlusselement verdreht werden kann, die beiden Schnellverschlusselemente aber insbesondere bei profilierter Anlagefläche gegeneinander nicht verdrehbar sind. Dadurch kann die vorbeschriebene Ausrichtung der Entriegelungseinrichtungen gegenüber den Riegeln durchgeführt werden und trotzdem ein mit dem Schnellverschlusselement verbundenes Bauteil drehbar am Schnellverschluss gelagert sein.

Ähnlich kann, wie in Anspruch 6 vorgeschlagen, eine etwa parallel zur Anlagefläche stehende Drehachse für eine Drehverbindung vorgesehen sein. Wenn beide Drehverbindungen ausgeführt sind, ist eine Justierung und Einstellung des jeweiligen Bauteils in allen Raumrichtungen möglich. Um eine richtungsstabile Einstellung erreichen zu können, sollten die in Anspruch 7 genannten Reibungselemente in den Drehverbindungen vorgesehen sein, so dass diese eine relativ hohe Reibung aufweisen und die Ausrichtung und Einstellung der Drehverbindungen sich nicht unerwünscht verstellt.

Der aufgezeigte Schnellverschluss kann vorteilhaft bei kinematografischen Geräten als Verbindung zwischen dem Gerät an sich und einem davon abnehmbaren Handgriff verwendet werden. Gerade bei kinematografischen Geräten kommt es auf eine stabile und feste Verbindung zwischen dem Gerät und dem Handgriff an, da das Gerät am Handgriff nicht wackeln darf und zugleich müssen alle Bewegungen der Hand bzw. des Handgriffs auf das Gerät übertragen werden können. Weiter soll der Handgriff gegenüber dem Gerät in unterschiedliche Stellungen gebracht werden können, sowohl zur Anpassung an individuelle Erfordernisse als auch beispielsweise für die Aufbewahrung und den Transport abgeklappt werden, so dass sich eine Schnellverschlussausführung mit einer oder zwei Drehverbindungen gemäss Anspruch 5 oder 6 empfiehlt. Der erfindungsgemässe Schnellverschluss, insbesondere in den Ausgestaltungen gemäss der Unteransprüche, ist für die Verwendung bei kinematografischen Geräten besonders vorteilhaft, da der Handgriff möglichst schnell und problemlos aufgesteckt und abgenommen werden soll, damit nicht von der eigentlichen Tätigkeit des Fotografierens oder Filmens abgelenkt wird.

Als besonders vorteilhaft hat sich erwiesen, eine Filmleuchte mit einem abnehmbaren Handgriff zu versehen.

Filmleuchten werden sowohl als Handleuchten als auch auf Stativen befestigt verwendet. Bisher war es nur beschränkt möglich, eine Leuchte für beide Zwecke einzusetzen. Eine Leuchte für den reinen Stativaufbau hat keinen Handgriff und kann daher, z.B. wegen der entstehenden Wärme am Gehäuse, nicht ohne weiteres in der Hand gehalten werden. Bei einer Leuchte für Handbetrieb ist, wie auch bei Filmapparaten, der Handgriff so angebracht, dass der Schwerpunkt der Leuchte unterstützt ist. Die Gewindebohrung für die Stativbefestigung ist daher bei einer solchen Leuchte, sofern sie überhaupt eine aufweist, am Fuss des Handgriffs angebracht, so dass auch beim Stativbetrieb der Schwerpunkt unterstützt ist. Wegen des relativ grossen Abstandes des Schwerpunkts vom Stativkopf über den Handgriff bewegt sich der Schwerpunkt bei Neigung der Leuchte aus dem Bereich oberhalb des Stativkopfes. Das Stativrohr und damit die Mitte der Aufstandsfläche liegt damit nicht mehr unter dem Schwerpunkt, so dass die Gefahr besteht, dass das Stativ insgesamt umkippt. Wenn nun der Handgriff abgenommen werden kann und wie in Anspruch 10 vorgeschlagen, am ersten Schnellverschlusselement eine Gewindebohrung zum Befestigen am Stativkopf vorgesehen ist, kommt der Schwerpunkt des Gerätes näher an den Stativkopf heran, wodurch die Kippgefahr wesentlich verringert ist. Es kann allerdings, wie ebenfalls in Anspruch 10 vorgeschlagen, auch am Handgriff eine Gewindebohrung vorgesehen sein, womit die Filmleuchte insgesamt an einem Stativ befestigt wird. Insbesondere für den Fall, dass der Handgriff an der Leuchte über Drehverbindungen angelenkt ist, kann man auch bei aufgesetztem Handgriff eine variable Einstellung, ohne die Leuchte stark kippen zu müssen, erreichen. Die hier für eine Filmleuchte gemachten Ausführungen treffen im wesentlichen auch für andere kinematografischen Geräte, wie beispielsweise Filmapparate und Fotokameras, zu.

Ein Ausführungsbeispiel der Erfindung wird anhand einer Zeichnung mit weiteren Merkmalen, Einzelheiten und Vorteilen näher beschrieben.

Es zeigen

Fig. 1 ein erstes Schnellverschlusselement mit Blick auf seine Anlagefläche,

Fig. 2 ein zweites Schnellverschlusselement, ebenfalls mit Blickrichtung auf seine Anlagefläche,

Fig. 3 einen Schnitt durch den Schnellverschluss entlang der Linie A-A aus Fig. 2 bei zusammengefügten Schnellverschlusselementen,

Fig. 4 einen Schnitt entlang der Linie B-B aus Fig. 2 bei zusammengefügten Schnellverschlusselementen,

Fig. 5 einen teilweisen Schnitt des Schnellverschlusses gemäss Fig. 3 bei betätigter Entriegelung,

Fig. 6 den Schnellverschluss bei getrennten Schnellverschlusselementen in der Seitenansicht,

Fig. 7 eine Filmleuchte mit abnehmbarem Handgriff und einem Schnellverschluss als Verbindungselement,

Fig. 8 eine Filmleuchte nach Fig. 7 mit abgewinkeltem Handgriff.

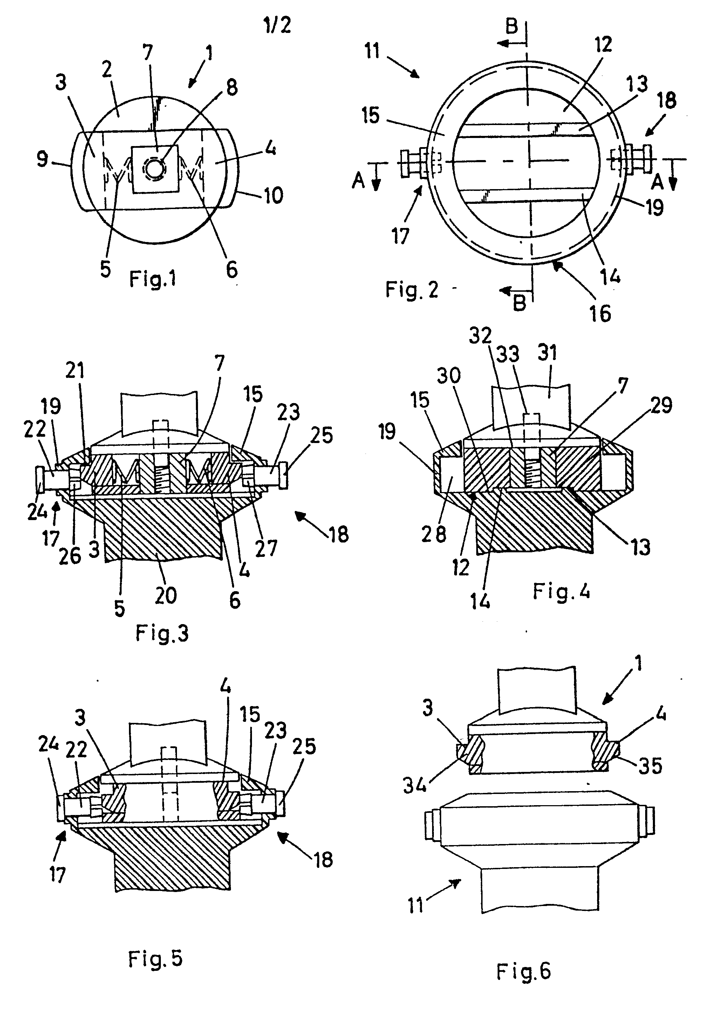

In Fig. 1 ist ein erstes Schnellverschlusselement 1 dargestellt, das mit einem der Übersichtlichkeit wegen nicht dargestellten Bauteil, beispielsweise einer Filmleuchte, verbunden ist, wobei dieses Bauteil sich nach hinten in die Zeichenebene erstreckt. Das Schnellverschlusselement 1 besteht aus einem Zylinder 2 und zwei Riegeln 3, 4, die durch Federn 5, 6 gegen ein Mittelteil 7 mit einer Gewindebohrung 8 abgestützt sind. Die Riegel 3, 4 haben an ihren Aussenseiten 9, 10 eine kreisbogenförmige Gestalt. Weitere Einzelheiten des ersten Schnellverschlusselements ergeben sich aus dem Schnitt nach Fig. 3

In Fig. 2 ist ein zweites Schnellverschlusselement in der Draufsicht gezeigt. Es ist eine Anlagefläche 12 mit aus der Zeichenebene vorspringenden Stegen 13, 14, die innerhalb eines aus der Zeichenebene vorspringenden Bundes 15 eines zylindrischen Fallenteiles 16 für die Riegel 3, 4 aus Fig. 1 liegt. Weiter sind gegenüberliegende Entriegelungseinrichtungen 17, 18 zu erkennen, die in Längsrichtung der Stege 13, 14 liegen. Die Entriegelungseinrichtungen 17, 18 werden in Verbindung mit Fig. 3 näher beschrieben. Mit einem strichliert gezeichneten Kreis ist die Materialstärke eines aus der Zeichenebene vorspringenden Ringes 19 angedeutet, der den Bund 15 an seiner Oberseite trägt.

In Fig. 3 ist das erste und zweite Schnellverschlusselement 1, 11 bereits zusammengesteckt und geschnitten dargestellt. Das zweite Schnellverschlusselement 11 sitzt auf einem Bauteil 20, beispielsweise einem Handgriff, und ist ebenfalls zylindrisch mit dem umlaufenden Ring 19 und dem daran aufgesetzten, und nach innen zur Zylinderachse vorspringenden Bund 19 aufgebaut. Der Bund 15 hat eine waagrecht verlaufende Unterseite 21, die an einer ebenfalls waagrecht verlaufenden oberen Fläche der Riegel 3, 4 anliegt. Die Riegel 3, 4 sind in dieser Stellung von den Federn 5, 6 gegen Anschläge am ersten Schnellverschlusselement 1 gedrängt, die der Übersichtlichkeit halber nicht dargestellt sind. Es wäre jedoch auch möglich, die Riegel 3, 4 so auszuführen, dass sie in der Stellung nach Fig. 1 bzw. Fig. 3 im unbelasteten Zustand sind, d.h. dass die Federn in ihrem Neutralzustand sind, wobei aber die Federn 5, 6 mit den Riegeln 3, 4 und dem Mittelteil 7 verbunden sein müssten.

Die Entriegelungseinrichtungen 17, 18 sind so ausgeführt, dass im Ring 19 gegenüberliegende Bohrungen in Richtung auf die Riegel 3, 4 vorgesehen sind, in die darin bewegliche Schubstangen 22, 23 eingesetzt sind. An der Aussenseite der Schubstangen 22, 23 sind Betätigungsknöpfe 24, 25 angeformt, die im Durchmesser grösser als die Bohrungen sind. In Richtung auf die Riegel 9, 10 tragen die Schubstangen auseinandergespreizte Elemente 26, 27. Die Elemente 26, 27 sind so mit Einlaufschrägen versehen, dass sie in die entsprechenden Bohrungen im zusammengepressten Zustand eingedrückt werden können und sich nach der Durchführung durch die Bohrungen auseinanderspreizen und so Anschläge bilden. Die Schubstangen 22, 23 sind somit gegen das Herausfallen aus dem Ring 19 gesichert und können zwischen den Betätigungsknöpfen 24, 25 und den Elementen 26, 27 hin- und herbewegt werden.

In Fig. 4 ist ein Schnitt entlang der Linie B-B aus Fig. 2 bei zusammengesetztem ersten und zweiten Schnellverschlusselement 1, 11 dargestellt. Hier ist wiederum der umlaufende Ring 19 mit dem aufgesetzten Bund 15 zu sehen, die zum ersten Schnellverschlusselement 1 hin einen Raum 28 bilden, in dem in einem Schnitt senkrecht dazu gemäss Fig. 3 die Riegel 3, 4 eingreifen. Weiter ist aus diesem Schnitt zu erkennen, dass die Stege 13, 14 entlang einer relativ flachen Nut 29 in der Anlagefläche 30 des ersten Schnellverschlusselements 1 verlaufen und in diese Nut 29 so eingreifen, dass der seitliche Aussenteil der Anlagefläche 30 und der Anlagefläche 12 des zweiten Schnellverschlusselements 11 aufeinanderliegen. Die Nut 29 und die Stege 13, 14 stellen somit ein Profil dar, in das das erste und zweite Schnellverschlusselement einrastet, wenn die Entriegelungseinrichtungen 17, 18 in der Mitte an den Riegeln 3, 4 zu liegen kommen.

Das Mittelteil 7 ist mit der Halterung 31 für ein daran angebrachtes Bauteil bzw. mit der Platte 32 drehbeweglich verbunden. Diese einfach herzustellende Drehverbindung ist nicht im Detail näher gezeichnet und könnte durch die strichliert angedeutete Zapfenlagerung 33 mit gegebenenfalls zwischen dem Mittelteil 7 und der Platte 32 angebrachter Beilagscheibe oder einer Tellerfeder ausgeführt sein.

In Fig. 5 sind die Entriegelungseinrichtunge. 17, 18 betätigt und die Schubstangen 22, 23 in Richtung auf die Riegel 3, 4 eingeschoben. Die Schubstangen 22, 23 sind dabei bis an die untere Kante des ersten Schnellverschlusselements 1 bewegbar, wo sie anschlagen. Dadurch werden die Riegel 3, 4 genau bis zur Aussenseite des ersten Schnellverschlusselements 1 zurückgedrängt, so dass der Bund 15 nach unten über die Riegel 3, 4 führbar ist; die Schubstangen 22, 23 können aber nicht den Riegeln 3, 4 in ihre Führungskanäle nachgeschoben werden, wodurch eine unerwünschte Verriegelung durch die Schubstangen 22, 23 erzeugt würde. Eine Begrenzung der Einschublänge für die Schubstangen 22, 23 durch die Betätigungsknöpfe 24, 25 ist ebenfalls möglich. Hierbei ist aber eine genaue Fertigung der Entriegelungseinrichtungen 17, 18 in ihrer Gesamtheit erforderlich, da sonst die Gefahr besteht, dass der Schnellverschluss insgesamt beim Auseinandernehmen leicht verhakt.

Die Funktion des Schnellverschlusses soll anhand der Figuren 3 bis 6 erläutert werden:

Um die beiden Bauteile 20, 31 zusammenzusetzen, werden das erste und zweite Schnellverschlusselement 1, 11 so übereinandergebracht, wie in Fig. 6 dargestellt. Anschliessend werden beide Elemente, 1, 11 ineinandergeschoben, wobei die Riegel 3, 4 durch Einlaufschrägen 34, 35, die an der Oberseite des Bundes 15 gleiten, zusammengedrängt werden. Für den Fall, dass die Nut 29 bereits ausgerichtet über den Stegen 13, 14 liegt, werden beide Elemente 1, 11 so lange zusammengedrückt, bis die Stege 13, 14 in die Nut 29 eingeführt sind und die Riegel 3, 4 durch die Federn 5, 6 auseinandergeschoben werden und unter den Bund 15 eingreifen. Dabei werden die Schubstangen 22, 23 auseinandergeschoben und nehmen die in Fig. 3 gezeichnete Position ein. Für den Fall, dass die Nut 29 und die Stege 13, 14 einen Winkel bilden, können beide Elemente 1, 11 noch nicht so weit zusammengeschoben werden, dass die Riegel 3, 4 unter den Bund 15 fassen. Es brauchen aber lediglich die beiden Elemente 1, 11 so lange verdreht zu werden, bis die Einrastung erfolgt. Dies kann im ungünstigsten Fall etwa eine halbe Umdrehung sein. Dann schnappen die Riegel 3, 4 unter den Bund 15 und die Verbindung ist entsprechend Fig. 3 und Fig. 4 hergestellt. Es könnte aber auch die Anlagefläche der Riegel 3, 4 am Bund 15 zur Aussenseite hin etwas abgeflacht sein, so dass auch dann, wenn die Stege 13, 14 noch nicht in die Nut 29 eingerastet sind, die Riegel 3, 4 etwas unter den Bund 15 greifen. Wenn dann bei der erforderlichen Verdrehung die Nut 29 und die Stege 13, 14 fluchten, werden beide Elemente 1, 11 durch die nach aussen drängende Bewegung der Riegel 3, 4 zusammengezogen und wie in Fig. 3 endgültig verriegelt.

Bei der Verdrehung wäre es möglich, dass die Schubstangen 22, 23, die frei beweglich sind, sich an den Seiten der Riegel 3, 4 verhaken. Dies kann dadurch ausgeschlossen werden, dass, wie gezeichnet, die Schubstangen 22, 23 an den auseinanderspreizbaren Elementen 26, 27 abgeschrägt sind, oder dass an den Riegeln 3, 4 seitlich Auflaufschrägen für die Schubstangen 22, 23 vorgesehen sind.

Zum Lösen der Schnellverschlussverbindung werden die Betätigungsknöpfe 24, 25 eingedrückt, so dass der in Fig. 5 dargestellte Zustand der Riegel 3, 4 eingenommen wird.

Nun kann das untere, zweite Schnellverschlusselement 11 nach unten abgezogen werden, wobei der Bund 15 über die Riegel 3, 4 nach unten geschoben wird. Wenn dabei die Schubstangen 22, 23 nach unten aus dem Bereich der Riegel 3, 4 gezogen werden, liegt bereits der Bund 15 an den Aussenseiten 9, 10 der Riegel 3, 4 an, wodurch diese so lange in ihrer eingeschobenen Position bleiben, bis der Bund insgesamt nach unten abgezogen ist. Damit ist wieder die auseinandergenommene Position gemäss Fig. 6 erreicht.

Bevorzugt sind die Schnellverschlussteile aus Kunststoff geformt, das Mittelteil 7 kann dabei ein Metalleinsatz mit der Gewindebohrung 8 sein.

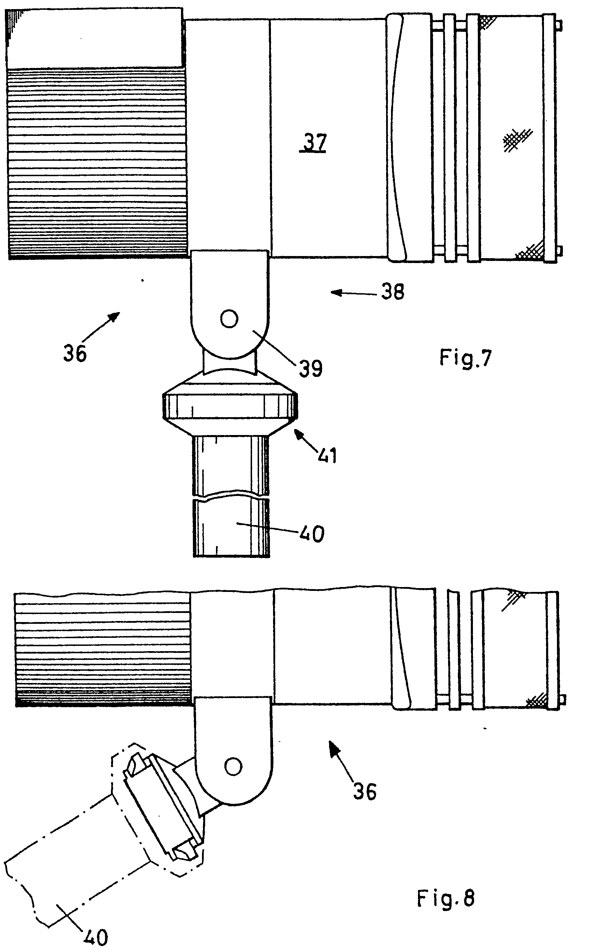

In Fig. 7 ist eine Filmleuchte 36 dargestellt, bestehend aus einem Lampengehäuse 37, einer Griffhalterung 38 mit einer Schwenkverbindung 39, einem Handgriff 40 und einem Schnellverschluss 41. Das erste Schnellverschlusselement ist dabei am Lampengehäuse 37 bzw. der Schwenkverbindung 39 angebracht und das zweite Schnellverschlusselement bildet das Oberteil des Handgriffs 40.

In Fig. 8 ist das untere Teil der Schwenkverbindung 39 im gekippten Zustand mit abgenommenem Handgriff 40 (strichlierte Linie) gezeichnet.

In Fig. 7 ist der Handgriff 40 auf die Filmleuchte 36 aufgesetzt, die Filmleuchte 36 ist damit für den Handbetrieb ausgerüstet. Der Handgriff kann dabei um die Schwenkachse 39 gekippt und zugleich im Schnellverschluss 41, wie weiter oben beschrieben, gedreht werden. Die Drehung und Schwenkung ist jedoch nur gegen eine hohe Reibung möglich, so dass sich eingestellte Positionen nicht willkürlich verändern.

Am Handgriff 40 könnte an seiner Unterseite eine (nicht dargestellte) Gewindebohrung entsprechend der Gewindebohrung im Mittelteil 7 (siehe Fig. 3 und Fig. 4) vorgesehen sein. Damit könnte der Handgriff 40 auf ein Stativ geschraubt werden. Die Justierung der Filmleuchte 36 könnte dabei durch eine Neigung in der Schwenkverbindung 38 und Drehung im Schnellverschluss 41 vorgenommen werden. Dies ist dann von Vorteil, wenn nur ein einfaches Stativ ohne schwenk- und drehbaren Stativkopf zur Verfügung steht.

Wenn die Filmleuchte 36 auf einem schwenkbaren Stativkopf befestigt werden soll, ist es zweckmässig, den Handgriff 40 abzunehmen, wie in Fig. 8 dargestellt. Nun kann die Filmleuchte 36 mit dem ersten Schnellverschlusselement mit dem Stativkopf verbunden werden, so dass der Schwerpunkt der Filmleuchte 36 in die Nähe des Schwenkkopfes zu liegen kommt. Bei Neigungsbewegungen mit dem Stativschwenkkopf bleibt dann der Schwerpunkt der Filmleuchte 36 etwa oberhalb des Stativschwenkkopfes, so dass keine hohen Kippkräfte auf das Stativ ausgeübt werden.

Zusammenfassend wird festgestellt, dass mit der Erfindung ein Schnellverschluss zur Verfügung gestellt wird, der eine stabile Verbindung schafft und bei einfachem Aufbau schnell und bequem zusammengefügt und gelöst werden kann.

**Patentansprüche**

1. Schnellverschluss für die lösbare Verbindung zweier Bauteile bestehend aus zwei zusammenfügbaren Schnellverschlusselementen (1, 11), von denen jedes mit einem Bauteil verbunden ist,

wobei beide Schnellverschlusselemente (1, 11) je eine Anlagefläche (12, 30) enthalten, die im geschlossenen Zustand des Schnellverschlusses aneinander anliegen,

am ersten Schnellverschlusselement (1) wenigstens zwei bewegliche, federbelastete Riegel (3, 4) im Winkel zueinander in einem Führungskanal vorgesehen sind, die über die Aussenseite des ersten Schnellverschlusselements (1) vorstehen und die Einlaufschrägen (34, 35) aufweisen, und am zweiten Schnellverschlusselement (11) im Bereich jedes Riegels (3, 4) eine Entriegelungseinrichtung (17, 18) vorgesehen ist, bestehend aus einer in Richtung auf den jeweiligen Riegel (3, 4) weisenden Führung und einem darin von der Aussenseite des zweiten Schnellverschlusselements (11) her bewegbaren und betätigbaren Schubelement (22, 23), mit dem jeder Riegel (3, 4) gegen die Kraft seiner Rückstellfeder (5, 6) zur Innenseite des ersten Schnellverschlusselements (1) hin verschiebbar ist, dadurch gekennzeichnet, dass die Anlageflächen (12, 30) senkrecht zur Schliessrichtung des Schnellverschlusses liegen und im geschlossenen Zustand stumpf aneinander liegen,

dass das zweite Schnellverschlusselement (11) ein rotationssymmetrisches Fallenteil (16) enthält, das aus einem etwa senkrecht zur Anlagefläche (12) stehenden Verbindungsteil (19) und einem daran angeschlossenen, die Riegel (3, 4) im geschlossenen Zustand übergreifenden Vorsprung (15) besteht, so dass das erste Schnellverschlusselement (1) zwischen der Anlagefläche (12) und dem Vorsprung (15) gehalten und abgestützt ist, und

dass die Anlageflächen (12, 30) formschlüssig ineinandergreifende Profile (13, 14, 29) aufweisen, die so angeordnet sind, dass in der Eingriffsstellung die Riegel (3, 4) gegenüber den Schubelementen (22, 23) liegen.

2. Schnellverschluss nach Anspruch 1, dadurch gekennzeichnet, dass zwei um 180° versetzte Riegel (3, 4) vorgesehen sind.

3. Schnellverschluss nach Anspruch 1 oder 2, dadurch gekennzeichnet, dass die formschlüssig ineinandergreifenden Profile aus mindestens einer Nut (29) an einer Anlagefläche (30) und aus wenigstens einem an einer Seitenwand der Nut (29) anliegenden Steg (13, 14) der anderen Anlagefläche (12) bestehen.

4. Schnellverschluss nach einem der Ansprüche 1 bis 3, dadurch gekennzeichnet, dass die Riegel (3, 4) seitliche Einlaufschrägen für das Auflaufen der Schubelemente (22, 23) auf die Riegel (3, 4) aufweisen.

5. Schnellverschluss nach einem der Ansprüche 1 bis 4, dadurch gekennzeichnet, dass zwischen einem Schnellverschlusselement (1) und dem dazugehörigen Bauteil (31; 37) eine Drehverbindung mit etwa senkrecht zur Anlagefläche (30) stehender Drehachse hergestellt ist.

6. Schnellverschluss nach einem der Ansprüche 1 bis 5, dadurch gekennzeichnet, dass zwischen einem Schnellverschlusselement (1) und dem zugehörigen Bauteil (37) eine Drehverbindung (39) mit etwa parallel zur Anlagefläche (30) stehender Drehachse hergestellt ist.

7. Schnellverschluss nach einem der Ansprüche 5 oder 6, dadurch gekennzeichnet, dass die Drehverbindung Reibelemente enthält.

8. Schnellverschluss nach einem der Ansprüche 1 bis 7, dadurch gekennzeichnet, dass das erste Bauteil ein kinematografisches Gerät (37) und das zweite Bauteil ein davon abnehmbarer Handgriff (40) ist.

9. Schnellverschluss nach Anspruch 8, dadurch gekennzeichnet, dass das erste Bauteil eine Filmleuchte (36) ist.

10. Schnellverschluss nach Anspruch 8 oder 9, dadurch gekennzeichnet, dass das erste Schnellverschlusselement (1) eine in Richtung auf den Handgriff (40) weisende Gewindebohrung (8) und der Handgriff (40) auf seiner Unterseite eine entsprechende Gewindebohrung enthält.

**Revendications**

1. Dispositif à verrouillage rapide pour la liaison libérable de deux éléments constructifs, constitué par deux éléments de dispositif à verrouillage rapide assemblables (1, 11), dont chacun est relié à un élément constructif, les deux éléments de dispositif à verrouillage rapide (1, 11) comportant chacun une surface d'appui (12, 30), qui s'appliquent l'une contre l'autre en position fermée du dispositif à verrouillage rapide, au moins deux verrous mobile (3, 4) rappelés par ressort étant prévus sur le premier élément de dispositif à verrouillage rapide (1), en faisant un angle entre eux dans un canal de guidage, verrous qui font saillie au-delà de la face externe du premier élément de dispositif à verrouillage rapide (1) et qui présentent des pans obliques d'entrée (34, 35), et sur le second élément de dispositif à verrouillage rapide (11), au voisinage de chaque verrou (3, 4), est prévu un dispositif de déverrrouillage (17, 18), constitué par un guide dirigé suivant la direction du verrou (3,4) concerné et un élément de poussée (22, 23) pouvant être déplacé et actionné dans celui-ci à partir de la face externe du second élément de dispositif à verrouillage rapide (11), à l'aide duquel chaque verrou (3, 4) peut être déplacé à l'encontre de l'action de son ressort de rappel (5, 6) vers la face interne du premier élément de dispositif à verrouillage rapide (1), caractérisé en ce que les surfaces d'appui (12, 30) se situent perpendiculairement à la direction de fermeture du dispositif à verrouillage rapide et s'appliquent à plat l'une contre l'autre à l'état fermé, ce que le second élément de dispositif à verrouillage rapide (11) comporte une pièce dormante symétrique en rotation (16), qui est constituée par une partie de liaison (19) située approximativement perpendiculairement à la surface d'appui (12) et une saillie (15) s'y raccordant, chevauchant les verrous (3, 4) en position fermée, de telle sorte que le premier élément de dispositif à verrouillage rapide (1) est retenu et soutenu entre la surface d'appui (12) et la saillie (15), et en ce que les surfaces d'appui (12, 30) présentent des profils (13, 14, 29) s'interpénétrant à liaison de forme, qui sont agencés de telle sorte que, dans la position d'engagement, les verrous (3, 4) se trouvent en face des éléments de poussée (22, 23).

2. Dispositif à verrouillage rapide suivant la revendication 1, caractérisé en ce que deux verrous (3, 4) décalés à 180° sont prévus.

3. Dispositif à verrouillage rapide suivant la revendication 1 ou 2, caractérisé en ce que les profils s'interpénétrant à liaison de forme sont constitués par au moins une rainure (29) sur une surface d'appui (30) et au moins une nervure (13, 14) de l'autre surface d'appui (12), s'appuyant contre une paroi latérale de la rainure (29).

4. Dispositif à verrouillage rapide suivant une des revendications 1 à 2, caractérisé en ce que les verrous (3, 4) présentent des pans obliques d'entrée latéraux pour l'engagement des éléments de poussée (22, 23) sur les verrous (3, 4).

5. Dispositif à verrouillage rapide suivant une des revendications 1 à 3, caractérisé en ce qu'entre un élément de dispositif à verrouillage rapide (1) et l'élément constructif correspondant (31; 37) est établie une liaison rotative avec un axe de rotation situé approximativement perpendiculairement à la surface d'appui (30).

6. Dispositif suivant une des revendications 1 à 5, caractérisé en ce qu'entre un élément de dispositif à verrouillage rapide (1) et l'élément constructif (37) est établie une liaison rotative (39) avec un axe de rotation situé approximativement parallèlement à la surface d'appui (30).

7. Dispositif à verrouillage rapide suivant une des revendications 5 ou 6, caractérisé en ce que la liaison rotative comporte des éléments de friction.

8. Dispositif à verrouillage rapide suivant une des revendications 1 à 7, caractérisé en ce que le premier élément constructif est un appareil cinématographique (37) et le second élément constructif est un organe de prise (40) séparable de celui-ci.

9. Dispositif à verrouillage rapide suivant la revendication 8, caractérisé en ce que le premier élément constructif est une lampe pour filmer (36).

10. Dispositif à verrouillage rapide suivant la revendication 8 ou 9, caractérisé en ce que le premier élément de dispositif à verrouillage rapide (1) comporte un alésage taraudé (8) dirigé dans la direction de l'organe de prise (40) et l'organe de prise (40) comporte sur sa face inférieure, un alésage taraudé correspondant.

**Claims**

1. Quick-acting fastening for the releasable conection of two components, consisting of two quick-acting fastening elements (1, 11) which can be joined together and each of which is connected to a component, the two quick-acting fastening elements (1, 11) each containing a bearing surface (12, 30), the said bearing surfaces resting against one another when the quick-acting fastening is closed, there being on the first quick-acting fastening element (1), in a guide channel and at an angle to one another, at least two movable spring-loaded bolts (3, 4) which project beyond the outer face of the first quick-acting fastening element (1), and which have run-in slopes (34, 35), and there being on the second quick-acting fastening element (11), in the region of each bolt (3, 4), a release device (17, 18) which consists of a guide pointing in the direction of the particular bolt (3, 4) and of a pusher element (22, 23) which is movable and actuable by the outer face of the second quick-acting fastening element (11) and by means of which each bolt (3, 4) can be shifted, counter to the force of its restoring spring (5, 6) towards the inner face of the first quick-acting fastening element (1), characterized in that the bearing surfaces (12, 30) are perpendicular to the closing direction of the quick-acting fastening and rest flush against one another in the closed state, in that the second quick-acting fastening element (11) contains a rotationally symmetrical latsch part (16) which consists of a connecting part (19) arranged approximately perpendicularly relative to the bearing surface (12) and of a projection (15) connected to the said connecting part and engaging over the bolts (3, 4) in the closed state, so that the first quick-acting fastening element (1) is held and supported between the bearing surface (12) and the projection (15), and in that the bearing surfaces (12, 30) have profiles (13, 14, 29) which engage positively into one another and which are arranged in such a way that, in the engaged position, the bolts (3, 4) are located opposite the pusher elements (22, 23).

2. Quick-acting fastening according to Claim 1, characterized in that two bolts (3, 4) offset 180° relative to one another are provided.

3. Quick-acting fastening according to Claim 1 or 2, characterized in that the profiles engaging positively into one another consist of at least one groove (29) in one bearing surface (30) and of at least one web (13, 14) resting against a side wall of the groove (29) and located on the other bearing surface (12).

4. Quick-acting fastening according to one of Claims 1 to 3, characterized in that the bolts (3, 4) have lateral run-in slopes allowing the pusher elements (22, 23) to run onto the bolts (3, 4).

5. Quick-acting fastening according to one of Claims 1 to 4, characterized in that a rotary joint with an axis of rotation approximately perpendicular to the bearing surface (30) is provided between one quick-acting fastening element (1) and the associated component (31; 37).

6. Quick-acting fastening according to one of Claims 1 to 5, characterized in that a rotary joint (59) with an axis of rotation approximately parallel to the bearing surface (30) is provided between one quick-acting fastening element (1) and the associated component (37).

7. Quick-acting fastening according to one of Claims 5 or 6, characterized in that the rotary joint contains friction elements.

8. Quick-acting fastening according to one of Claims 1 to 7, characterized in that the first component is a cinematographic camera (37) and the second component is a handle (40) which can be removed from this.

9. Quick-acting fastening according to Claim 8, characterized in that the first component is a film light (36).

10. Quick-acting fastening according to Claim 8 or 9, characterized in that the first quick-acting fastening element (1) contains a threaded bore (8) pointing in the direction of the handle (40), and the handle (40) contains a corresponding threaded bore on its underside.

1/2

Fig.1

Fig. 2

Fig.3

Fig. 4

Fig. 5

Fig.6

37

38

36

39

Fig.7

41

40

36

40

Fig.8